**Europäisches Patentamt**

**European Patent Office**

**Office européen des brevets**

(19)

(11) Publication number: **0 203 467**
**A1**

(12)

# EUROPEAN PATENT APPLICATION

(21) Application number: **86106599.3**

(22) Date of filing: **15.05.86**

(51) Int. Cl.⁴: **C 02 F 9/00,** C 02 F 1/58,
C 02 F 1/40, C 02 F 3/12,
B 01 D 17/04

(30) Priority: **17.05.85 IT 2075985**

(43) Date of publication of application: **03.12.86**
**Bulletin 86/49**

(84) Designated Contracting States: **AT BE CH DE FR GB LI
LU NL SE**

(71) Applicant: **Tovo S.p.A., Via Valdengo 24, I-10155 Torino
(IT)**

(72) Inventor: **Faieta, Marcello, Via Arona 6, I-20100 Milano
(IT)**
Inventor: **Tovo, Mario, Via Valdengo 24, I-10155 Torino
(IT)**

(74) Representative: **Dragotti, Gianfranco et al, SAIC
BREVETTI s.a.s. Viale Bianca Maria, 15, I-20122 Milano
(IT)**

(54) **Process and plant for the treatment of oily emulsions.**

(57) The oily waste lubricating and refrigerating liquid from
tank (10) is treated by filtration (12) and centrifugation (14).
The aqueous phase from the latter is conveyed via a process
tank (18) into tank (20), where it is heated a 30°–40°C to re-
move formaldehyde.
Then it is filtered (25) and aerated in tanks (24) (27).

**EP 0 203 467 A1**

ACTORUM AG

SPECIFICATION

The present invention relates to the treatment of oily emulsions and, more specifically to the treatment for the breaking of exhausted oily emulsions.

A typical example of the object of the invention is that of the invention is that of the emulsions of the mineral oils of petroliferous or synthetic origin, both in form of water in oil and in that of oil in water, particularly the exhausted or waste lubricating and refrigerating liquids of the plants and mechanical apparatus in which these emulsions are used. These residual liquids constituted and still constitute a serious problem under the point of view of the pollution: it is enough to consider that their COD values are normally of between 25,000 and 70,000.

Another problem connected to these liquids is that of the different origin thereof, namely of their different starting formulation, whereby their composition and their polluting rate are widely variable.

A further problem resides in that the lubricating and refrigerating fluids are initially added with bactericide and bacteriostatic compounds, which are mainly donors of formaldehyde, which substituted the agents of phenolic nature previously used for the same purpose, having the purpose of inhibiting the degradation of the fluids owing to a bacterial action.

It is just for this reason that the possibility of biologically treating these residual liquids for the pollution removal, since it was to be presumed that the said compounds, would exercise their specific bactericide or bacteriostatic action also towards the bacteria responsible of the depuration biological action.

Consequently, to date, a process was proposed for the treatment of these waste liquids which as a matter of fact was based on a fully chemical approach, which can be thus resumed:

- separation of the oily phase by heating to about 80°C and acidification at pH 1.5 with a strong acid, particularly sulfuric acid;

- neutralization with alkali and flocculation with decantation for the separation of the suspended solids and of the residual oily particles .

Such a process however has several problems and drawbacks, among which:

- the plant is rather complex and requires a steady watch.
- the use of acids and alkalies, at several concentrations, involves the use of a number of tanks and pumps and the use of special materials of high cost.
- the operating temperature of 80°C involves a high energy consumption.
- the recovered oil is not fully devoid of water and other impurities.
- the separated water maintains most of its polluting load, with the further addition of sulfates, and must undergo a depurating treatment before the disposal.
- the residual sludges formed during the neutralization phase must undergo a proper disposal treatment.

Alternatively with respect to the aforesaid process, another process has been proposed in which the exhausted lubricating and refrigerating emulsion is firstly subjected to an ordinary filtration and than to an ultrafiltration through membrane filters, at 45°C and under pressure. A concentrate is obtained with a 40% oil content which is heated to a temperature of about 80°C for the final separation.

In this case too several problems and drawbacks exist, among which:

- the plant is rather complex and involves remarkable maintenance costs.
- the operation is interrupted about every two weeks and the yield tends to be lowered during each cycle.
- the operating pressure the high recycle ratio, the maintaining of two temperature levels, i.e. 45°C and 85°C, for very extended times, involve high energy consumption.
- the recovered oil is not completely free from water.
- the separated water contains the fully polluting load, to which that of the periodical washing of the membrane filters is to be added, and must be subjected to a depuration treatment before the final disposal.

From the above short comments it clearly appears that as a matter of fact the problem has not to date found a fully satisfactory solution, whereby these effluents constitute a serious pollution source.

Main purpose of the present invention is that of solving such a problem in an industrially advantageous and economically acceptable manner.

To this end the present invention provides a process for the treatment of oily emulsions, particularly residual lubricating and refrigerating liquids, characterized by the following steps:

a) separation, possibly preceeded by a filtration aiming to remove breaks and coarser solid particles, preferably by centrifugation, of the oil possibly present in non emulsionated form as well as of the solid particles present in suspended form;

b) heating, to a temperature adjustable between 30°C and 40°C, of the resulting liquid phase for the removal of the formaldehyde present in the liquid to be treated;

c) aeration and oxidation of the resulting liquid, possibly preceeded by a filtration to eliminate breaks eventually formed in the previous heating phase, at a temperature of between 20 and 30°C for the time needed for the disappearance by biological route of the oil present in the emulsion.

As it can be readily appreciated from the above definition, it has been surprisingly found that once the formaldehyde or other donor thereof or any other bactericide or bacteriostatic is removed, the biological treatment of the emulsion causes the same to be broken and oil present in the emulsion to be removed, with a substantial reduction of the polluting load of the resulting water.

Otherwise stated on conceiving the process according to the present invention it has been first of all necessary to overcome a consolidated technical prejudice which excluded the possibilities of success of a biological treatment for the breaking of the emulsion and for the separation thereof into its two essential components.

Secondly it has been found that by the same biological treatment a complete elimination of the oils present in emulsion takes place without the need of having recourse to costly side treatments for the recovery and the disposal, which were necessary according to the prior art.

In turn the plant according to the present invention is characterized by comprising:

a) a first section for the separation of the oil present in a non emulsionated state in the exhausted lubricating and refrigerating liquid and of possible suspended solid particles;

b) a first tank for the heating to 30-40°C and maintaining for the time needed until the development of formaldehyde ceases said first tank comprising means for the upwards bubbling of air as big bubbles;

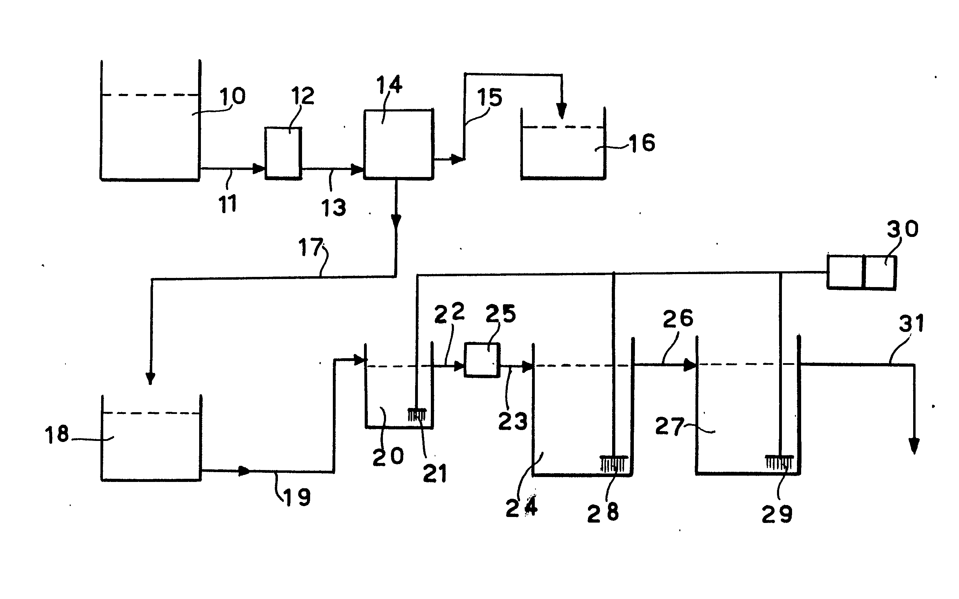

c) at least a second tank for aeration and oxidation, wherein air is fed and the liquid is maintained under the biological action of a previously cultivated bacterial floro for the time necessary for the emulsion breaking and for the disappearance of whateever trace of oil from the liquid said at least one second tank being adjusted at a temperature of between 20 and 30°C. The plant according to the invention is clearly shown although in schematic form in the enclosed drawing, it being intend that it is a preferred embodiment of the invention, permitting conceptually and structurally equivalent variations.

As it is seen in the enclosed drawing, the plant comprises a tank 10, the volume capacity of which must be consistent with the operating capacity of the subsequent stages, the tank being preferably provided with a bottom valve.

The tank 10 is connected through the pipe 11 with a filter 12 for retaining the coarser solid parts and possible breaks contained in the exhausted libricating and refrigerating liquids.

Downstream of the filter 12 the liquid is passed through a duct 13 to a centrifuge 14, of the type suitable for the separation, when present, of the mineral oil no longer emulsionated, forming the surface layer or anyhow mixed, from the aqueous phase.

In the centrifuge there are furthermore separated the solid particles, either metallic or not , possibly present in the lubricating and refrigerating liquid.

The mineral oil, separated and dewatered by means of the centrifuge is

0203467

colleted, through the discharge pipe 15, within a tank 16 for the subsequent disposal (for instance by combustion), whereas the aqueous phase, freed from the solid particles and from the non emulsionated mineral oils passes, through the discharge duct 17, into the process tank 18.

Also this tank must be of capacity consistent with the operating rate of the phases taking place downstream and is preferably provided with a bottom discharge valve (not shown) as well as with a device (for example with a propeller or with compressed air) for the stirring and the homogeneizing of the liquid present within the tank.

The plant obviously does foresee dosing and circulating pumps, not shown and positioned at the technically more suitable positions.

Through the connecting duct 19 the liquid present in the process tank 18 is conveyed to a tank 20 for the removal of the bactericide and bacteriostatic agents. In this tank, in the case in which the residual lubricating and refrigerating liquid contains, as bactericide or bacteriostatic agent, a donor of formaldehyde, the same liquid is maintained at a temperature adjustable between 30°C and 40°C, by means of a whatever heating system (a coil or jacket for heat exchange, an electrical resistance, etc.) the residual lubricating and refrigerating liquid being maintained at such a temperature until no further development of formaldehyde from the liquid takes place, for example for about 12 hours. In order to promote the removal in gaseous form of the formaldehyde, it is preferred to feed into the tank 20, through a suitable sparger 21 with big bubbles, an air amount sufficient to remove from the liquid the gaseous substances already contained in the lubricating and refrigerating liquid and/or those formed owing to the heating.

If in the tank 20 breaks are formed, these are retained in the filter 25, fed through the duct 22, the liquid being then transferred, through the duct 23 to a first aerating and oxidating tank 24 and therefrom through the duct 26 to a second aerating and oxidating tank 27.

In the tanks 24 and 27 the lubricating and refrigerating liquid undergoes a biological treatment, air being bubbled through the sparges 28 and 29, which are fed, as the sparger 21, from a series of blowers 30. The liquid
into tanks 24 and 27 must be maintained at a temperature of between 20
and 30°C, whereby a cooling step upstream of the tank 24 is foreseen for
instance by means of a cool water coil or jacket.

Obviosuly all along the plant thermostatic and timing controls are provided (not shown as being of standard type).

The volume of the tanks 24 and 27 is adjusted so that the lubricating and
refrigerating liquid does remain on the overage in the same tanks for about 24 hours.

The division into a number of aerating and oxidating tanks is dependent
on the initial polluting load (expressed as COD/BOD) as well as on the
residual polluting load at the outlet of each aerating and oxidating
tanks. After the last stage the aqueous liquid, essentially free from
mineral oil and having a low polluting load may be disposed through the
sewage system or passed to further depurating treatments through the discharge duct 31.

It is important to note that, since at the end of the treatment of
mineral oils, emulsionated with the water have been destroyed by the biological action, it is evident that the treatment times depend on the
content of emulsionated mineral oil. Furthermore, it being a biological
treatment, in the tanks 24 and 27 a suitable bacterial floro shall have
to be formed which, during the starting period shall autonomously adapt
itself to the properties of the exhausted lubricating and refrigerating
liquid to be treated.

It is also foreseen, if necessary or suitable, the addition of nutrient
substances, such a nitrogen phosphorous and oligomineral elements to support the metabolizing action of the bacterial flora.

The invention has been described with reference to a preferred embodiment, but modifications, and variations, conceptually equivalent are
possible and foreseable.

More particularly it is meant that the process according to the invention
is not limited to the treatment of exhausted lubricating and refrigera-

0203467

ting liquids, but it can be identically used in all cases the breaking of oily emulsions and the distruction of the emulsionated oily phase are required.

CLAIMS

1. A process for the treatment of oily emulsions for their breaking, particularly of waste lubricating and refrigerating liquids, characterized by the phases of:

a) heating of the liquid to an adjustable temperature of between 30 and 40°C and maintaining at such a temperature until the development of formaldehyde therefrom ceases;

b) aerating and oxidating of the resulting liquid at a temperature of between 20 and 30°C for the time needed for the desappearance by biological route of the oil present in the emulsion, this phase being carried out in the presence of a bacterial floro suitable for the biological action.

2. A process according to claim 1, characterized in that before said heating phase the liquid to be treated is subjected to at least one treatment for the separation of the non emulsioned oil and of the suspended solid particles.

3. A process according to claim 2, characterized in that said treatment consists in a centrifugation.

4. A process according to claim 2, characterized in that before said treatment a filtration is carried out for the separation of foreing solid bodies and of breaks present in the liquid to be treated.

5. A process according to claim 1, characterized in that said heating phase is carried out by simultaneously feeding air in form of big bubbles.

6. A process according to claim 1, characterized in that said heating and said maintaining at the temperature of 30 to 40°C, have a duration of about 12 hours.

7. A process according to claim 1, characterized in that said aeration and oxidation phase takes place with a feeding of air pressure and in a number of steps corresponding to the desired degree of water purification.

8. A process according to claim 7, characterized in that said aeration and oxidation phase takes place in two steps, each one having a duration of about 24 hours.

9. A plant for the carrying out of the process according to claim 1 and following ones, characterized by comprising a tank for the heating and the maintaining of the liquid to be treated at a temperature of between 30 and 40°C and at least an aeration and oxidation tank the latter being hed with air under pressure.

10. A plant according to claim 9, characterized in that said heating tank is provided with an air sparger releasing big bubbles of air.

11. A plant according to claim 9, characterized in that two serially located tanks are provided for the aeration and the oxidation of the liquid effluent of said heating tank.

12. A plant according to claim 11, characterized in that between said heating tank and said aeration and oxidation tanks a filter is provided for retaining breaks.

13. A plant according to claim 9, characterized in the upstream of said heating and maintaining tank a centrifuge is provided for the separation of non emulsionated oil and of suspended solid particles.

1/1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CHEMICAL ABSTRACTS, vol. 91, no. 24, 10th December 1979, page 334, abstract no. 198322b, Columbus, Ohio, US; A.M. KUNJUNNY: "Effluent control and pollution abatement in ammonia and urea plants of Iffco, Kalol.", & FERT. NEWS 1979, 24(4), 30-1,39 | 1-3,13 | C 02 F 9/00<br>C 02 F 1/58<br>C 02 F 1/40<br>C 02 F 3/12<br>B 01 D 17/04 |
| | --- | | |
| Y | F. MEINCK: "Industrie-abwässer", edition 4, 1968, pages 190-192, G. Fischer Verlag, Stuttgart, DE; "Abwässer von Maschinenfabriken und mechanischen Werkstätten"<br>* Page 191, line 19 - page 192 * | 1-3,13 | |
| | --- | | TECHNICAL FIELDS SEARCHED (Int. Cl.4) |
| A | DE-A-2 619 805 (METALLGESELLSCHAFT)<br>* Page 1, claim 1f,g * | 1 | C 02 F<br>B 01 D |
| | --- | | |
| A | GB-A-2 084 041  (STERLING DRUG)<br><br>* Front page; abstract;  page 5, lines 2-21 * | 1,4,7, 12 | |
| | --- | | |
| A | DE-A-1 932 100  (R. VON LINDE)<br><br>* Page 2, lines 22-30 * | 1,5,6, 9,10 | |
| | ---           -/- | | |

The present search report has been drawn up for all claims

| Place of search | Date of completion of the search | Examiner |
|---|---|---|
| THE HAGUE | 19-08-1986 | TEPLY J. |

| | DOCUMENTS CONSIDERED TO BE RELEVANT | | Page 2 |
|---|---|---|---|

| Category | Citation of document with indication. where appropriate, of relevant passages | Relevant to claim | CLASSIFICATION OF THE APPLICATION (Int. Cl.4) |
|---|---|---|---|
| A | US-A-3 054 602 (C.F. PROUDMAN)<br>* Figures 1,2; column 5, claim 1 *<br><br>----- | 7,8,11 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 19-08-1986 | TEPLY J. |